Europäisches Patentamt

European Patent Office

Office européen des brevets

(11) Publication number: **0 420 004 A1**

# EUROPEAN PATENT APPLICATION

(21) Application number: 90117910.1

(51) Int. Cl.5: **G01M 17/02, G01M 1/04**

(22) Date of filing: 18.09.90

(30) Priority: 28.09.89 US 414103

(43) Date of publication of application:
03.04.91 Bulletin 91/14

(84) Designated Contracting States:
DE FR GB

(71) Applicant: RANSBURG CORPORATION
P.O.Box 88512
Indianapolis, IN 46208(US)

(72) Inventor: **Eck, Todd Lee**
4192 South Creekside Drive
**New Palestine, IN 46163(US)**
Inventor: **Hamblen, Douglas Raymond**
147 N. 475 E.
Danville, IN 46122(US)

(74) Representative: **Vetter, Ewald Otto et al**
**Patentanwaltsbüro Allgeier & Vetter**
**Bahnhofstrasse 30 Postfach 102605**
**W-8900 Augsburg(DE)**

(54) Apparatus for positioning rotary elements.

(57) Apparatus (12) for positioning rotary elements (e.g. a tire 14) on a processing apparatus (10) includes a hub (20) for attachment to the tire processing apparatus (10). The hub (20) has an upper end, a lower end, and a plurality of tracks (61) which slope toward each other toward the upper end of the hub (20) and away from each other toward the lower end of the hub (20). An elevator motor (32) vertically movably couples a spider (38) to the hub (20). A plurality of shoes (50) equal in number to the plurality of tracks (61) is provided. Each shoe (50) is provided with means (62) for movably engaging a respective track (61) and means (48) for movably engaging the spider (38). Each shoe (50) is further provided with a surface for contacting the bead (66) of a tire (14). Actuation of the elevator motor (32) in one direction retracts the shoes (50) simultaneousLy vertically upwardly and radially inwardly of the hub (20) and actuation of the elevator motor (32) in the opposite direction projects the shoes (50) simultaneously vertically downwardly and radially outwardly to bring the tire bead contacting surfaces (70) of the shoes (50) into contact with the tire bead (66) and position the tire (14) on the Apparatus (12).

FIG. 1

This invention relates to apparatus for positioning rotary elements on machinery for processing the rotary elements. It is disclosed in the context of tooling for centering unmounted tires on a tire imbalance determining apparatus, but is believed to be useful in other fields as well.

Most American passenger vehicle tire manufacturers sample the imbalances of large percentages of their products for process quality control purposes and to meet customers' quality level requirements. The tires are tested unmounted since they are typically tested at the tire factory, rather than at the customer's, e.g., automaker's, facility.

A problem which has been encountered over the years with machinery for testing the imbalance of unmounted tires is the repeatability of the imbalance determining test. The same tire, tested repeatedly, can yield varying imbalance results. Of course, this problem raises serious questions about the value of testing for imbalance. As a consequence, tiremakers have long sought machinery which can determine imbalance with repeatable results.

Much of the repeatability error in existing machines made for this purpose is believed to be traceable to the fixtures or tooling which position the unmounted tires on the imbalance determining equipment. It is fairly evident that if the tooling cannot repeatably position a single tire in the same position each time it is tested, it is very difficult for the imbalance determining machine on which such tooling is mounted to give repeatable imbalance results for the tire.

Tire makers demand the flexibility to use the same piece of imbalance determining equipment for tires with different diameter beads. And as a practical matter, tooling which is reasonably universal in its applicability to tires having different bead diameters is preferred from the standpoint of ease of manufacture. Fewer different kinds of parts need to be inventoried to make up tooling, resulting in quicker delivery times and lower costs.

According to the invention, tooling for positioning rotary elements having different diameter rotational center openings includes multiple shoes, each provided with a surface for contacting the center openings of the rotary elements. Means are provided for simultaneously retracting the shoes radially toward each other to release the center opening of a rotary element and for simultaneously projecting the shoes radially away from each other to bring the center opening-contacting surfaces of the shoes into contact with the center opening and position the rotary element on the tooling. Each shoe has a first region with a radius substantially equal to the radius of the largest diameter center opening rotary element to be positioned.

Illustratively, each shoe further comprises on each side of the first region, a second region with a radius substantially equal to the radius of the next largest center opening rotary element to be positioned. Additionally, illustratively, each shoe further comprises on the side of each second region opposite the side adjacent the first region, a third region with a radius substantially equal to the radius of the third largest center opening rotary element to be positioned, and so on.

Illustratively the tooling comprises a hub having an upper end, a lower end, and a plurality of tracks equal in number to the number of shoes. The tracks slope toward each other toward the upper end of the hub and away from each other toward the lower end of the hub. The means for simultaneously retracting the shoes and for simultaneously projecting the shoes comprises a spider, an elevator motor for vertically movably coupling the spider to the hub, means on each shoe for movably engaging a respective track, and means on each shoe for movably engaging the spider. Actuation of the elevator motor in one direction retracts the shoes simultaneously vertically upwardly and radially inwardly of the hub and actuation of the elevator motor in the opposite direction projects the shoes simultaneously vertically downwardly and radially outwardly to bring some contacting surfaces of the shoes into contact with the center opening of whatever rotary element is to be positioned, automatically positioning it correctly on the tooling.

Illustratively, the tracks are tangent to a somewhat conical imaginary surface around the hub.

The invention may best be understood by referring to the following detailed description and accompanying drawings which illustrate the invention.

Fig. 1 illustrates a fragmentary sectional side elevational view of the tooling of the present invention mounted on an imbalance determining machine and disengaged from a tire;

Fig. 2 illustrates a fragmentary sectional side elevational view of the tooling and machine of Fig. 1, but with the tooling engaging and centering the tire on the machine;

Fig. 3 illustrates a top plan view of the tooling, taken generally along section lines 3-3 of Fig. 2;

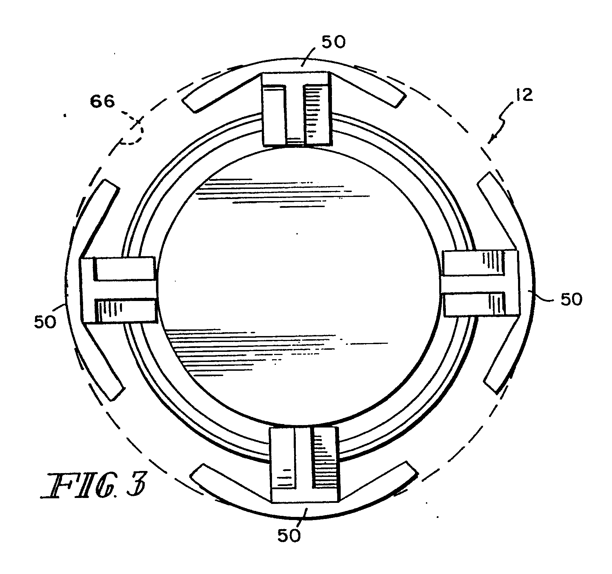

Fig. 4 illustrates a fragmentary sectional view of a detail of the tooling taken generally along section lines 4-4 of Fig. 2;

Fig. 5 illustrates a fragmentary sectional view of a detail of the tooling taken generally along section lines 5-5 of Fig. 2; and

Fig. 6 illustrates a fragmentary top plan view of one of the shoes of the tooling of Figs. 1-3, illustrating an operating principle of the present invention.

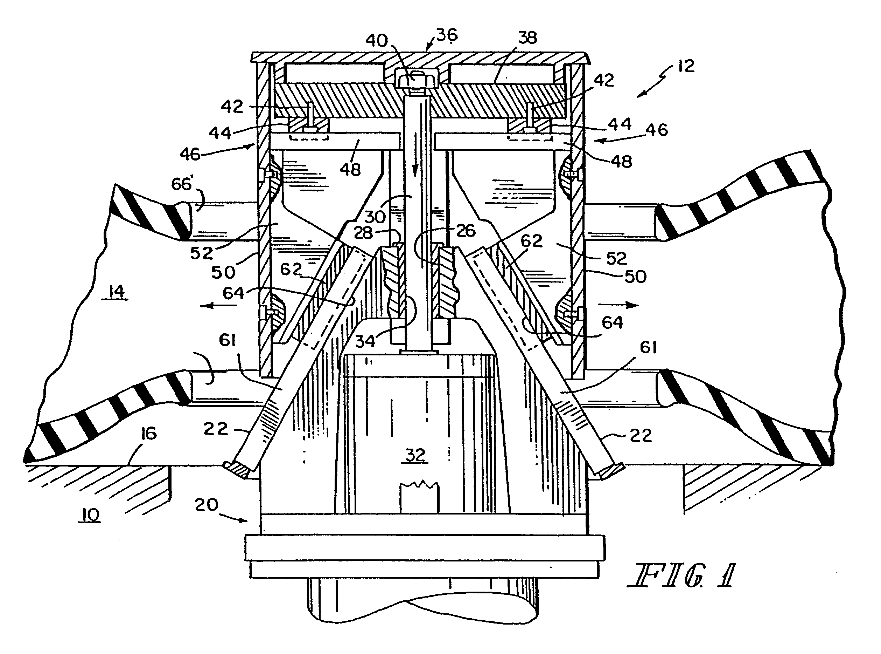

Referring now particularly to Figs. 1-3, an imbalance determining machine 10 of known type supports the tooling 12 of the invention and a tire 14 for engagement by the tooling 12. The tooling 12 engages and repeatably positions tires 14, the imbalances of which are to be determined. The machine 10 then suspends the tires above the machine 10 table surface 16, such as by elevation of the tooling 12 by an elevator mechanism (not shown), determines the imbalance of the tires 14 and elevates the tires 14 back to the table surface 16. The tooling 12 then releases the tires 14 for further processing or shipment.

Tooling 12 comprises a lower hub component 20 which provides illustratively four surfaces 22 which lie on the imaginary outside surface of a frustum of a downwardly opening cone. The apex of the cone is replaced by a vertical, right circular cylindrical opening 26 which mounts a sliding bearing 28 of a suitable low friction material. The shaft 30 of a double acting piston-and-cylinder type fluid motor 32 extends through the center opening 34 of bearing 28. The upper end 36 of shaft 30 is threaded, and a spider 38 is secured to the upper end 36 by a nut 40.

Referring particularly to Fig. 1, spider 38 has four equally spaced tapped and countersunk holes 42 formed in its underside. One component 44 of a slide 46 is attached to spider 38, illustratively by a cap screw in each hole 42. The remaining component 48 of each slide 46 is attached, illustratively by two cap screws, to a shoe 50 carrier 52.

Surfaces 22 are provided by rails 61 mounted, e.g., by cap screws, on the outer surface of hub 20.

Complementary, somewhat C-shaped cross section tracks 62 have longitudinally extending slots 64 within which rails 61 engage. Tracks 62 are mounted, e.g., by cap screws, on respective shoe carriers 52.

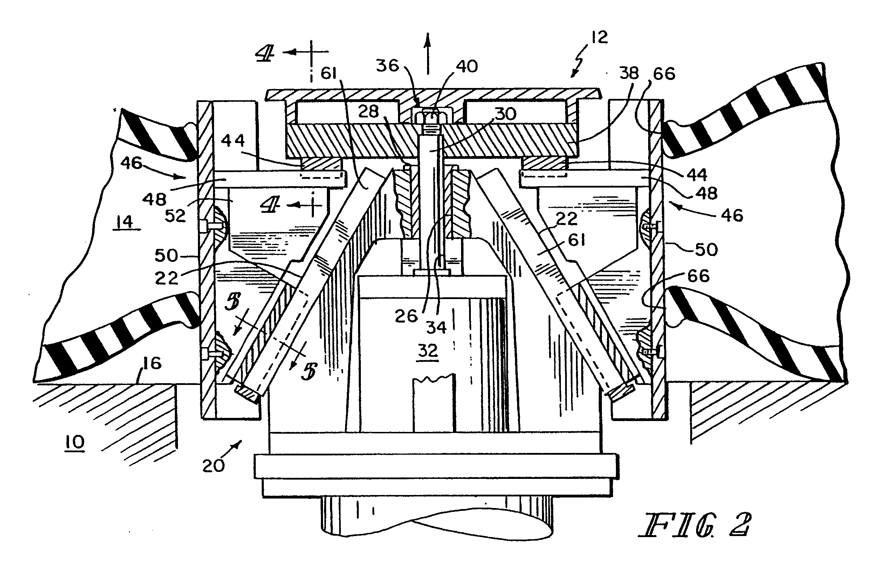

Downward projection of shaft 30 of fluid motor 32 projects shoes 50 uniformly into engagement with the bead 66 of a tire 14 the imbalance of which is to be determined, repeatably centering the tire 14 on the tooling 12 and therefore repeatably positioning the tire 14 on the imbalance determining machine 10. Fig. 2. Upward projection of shaft 30 of fluid motor 32 retracts shoes 50 from the bead 66 of a tire 14 the imbalance of which has been determined, releasing the tire 14 for further processing. Fig. 1.

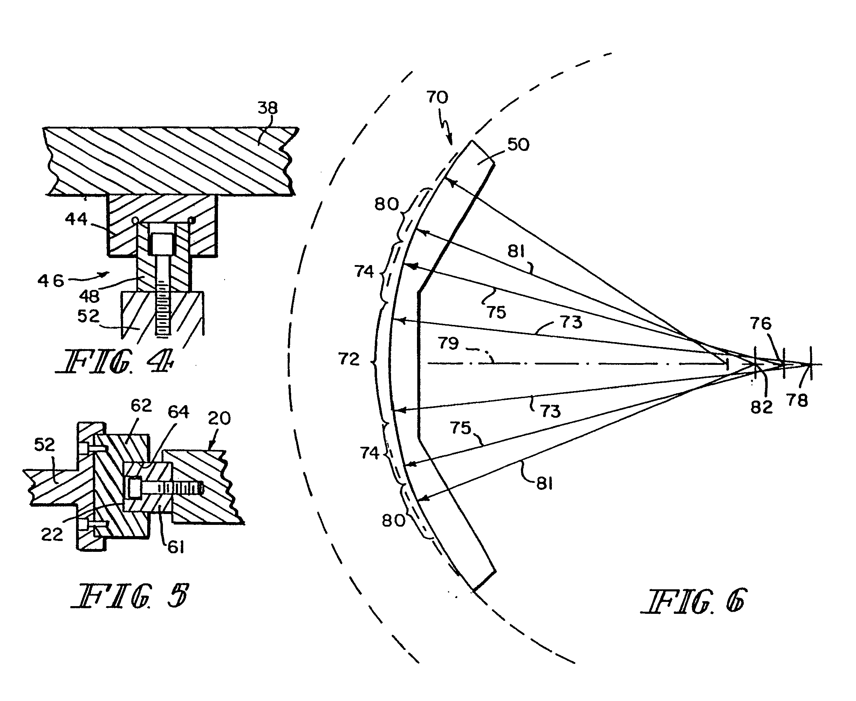

Another aspect of the invention can best be appreciated by referring to Fig. 6 which illustrates the profiles of the tire 14 engaging surfaces 70 of shoes 50. Each shoe 50 includes a circumferentially central, vertically extending region 72 having the radius of curvature 73 of the largest radius tire bead 66 the imbalance of which is to be determined using tooling 12. Next adjacent region 72 on each vertical edge thereof is a region 74 having the radius of curvature 75 of the next largest tire bead 66 the imbalance of which is to be determined using tooling 12. However, the center 76 of curvature of each region 74 is offset along the line 79 extending between the center 78 of curvature of region 72 and the circumferential center of region 72 toward shoe 50 from the center of curvature 78 of region 72 by substantially the difference between their radii of curvature. Next adjacent each region 74 on the vertical edge thereof opposite its edge adjacent region 72 is a region 80 having the radius of curvature 81 of the third largest tire bead 66 the imbalance of which is to be determined using tooling 12. However, the center 82 of curvature of each region 80 is offset along the line 79 extending between the center 78 of curvature of region 72 and the circumferential center of region 72 toward shoe 50 from the center 76 of curvature of each region 74 by substantially the difference between their radii of curvature. This pattern continues for each different bead 66 radius. As a result of this pattern, the largest bead 66 radius is contacted only by region 72 of each shoe 50, the next largest bead 66 radius is contacted only by regions 74 of each shoe 50, the third largest bead 66 radius is contacted only by regions 80 of each shoe 50 and so on.

## Claims

1. Apparatus (12) for positioning rotary elements (14) having different diameter center openings on a rotary element processing apparatus (10), the apparatus (12) including multiple shoes (50), each shoe (50) provided with a surface (70) for contacting the radially outer edge (66) of the center opening of a rotary element (14) and means (30, 32, 38) for simultaneously retracting the shoes (50) radially toward each other to release the radially outer edge (66) of the rotary element (14) and for simultaneously projecting the shoes (50) radially away from each other to bring the contacting surfaces (70) of the shoes (50) into contact with the radially outer edge (66) of the rotary element (14) and position the rotary element (14) on the apparatus (12), each shoe (50) having a first region (72) with a radius (73) substantially equal to the radius of the radially outer edge (66) of the largest diameter center opening rotary element (14) to be processed on the rotary element processing apparatus (10).

2. The apparatus of claim 1 wherein each shoe (50) further comprises, on each side of the first region (72), a second region (74) with a radius (75) substantially equal to the radius of the center opening (66) of the next largest diameter center opening rotary element (14) to be processed on the rotary element processing apparatus (10), the center of curvature (76) of each second region (74) being closer to the shoe (50) than the center of curvature (78) of the first region (72).

3. The apparatus of claim 2 wherein the center of curvature (76) of each second region (74) is closer to the shoe (50) than the center of curvature (78) of the first region (72) by substantially the difference between the radii of curvature (73, 75) of the first (72) and second (74) regions.

4. The apparatus of claim 2 wherein each shoe (50) further comprises a third region (80) adjacent each second region (74) on the side thereof opposite the first region (72), each third region (80) having a radius (81) substantially equal to the radius of the center opening (66) of the third largest diameter center opening rotary element (14) to be processed on the rotary element processing apparatus (10), the center of curvature (82) of each third region (80) being closer to the shoe (50) than the center of curvature (76) of each second region (74).

5. The apparatus of claim 4 wherein the center of curvature (82) of each third region (80) is closer to the shoe (50) than the center of curvature (76) of each second region (74) by substantially the difference between the radii of curvature (75, 81) of the second (74) and third (80) regions.

6. The apparatus of claim 1 wherein there are at least three such shoes (50).

7. The apparatus of claim 1 wherein the apparatus (12) further comprises a hub (20) for attachment to the rotary element processing apparatus (10), the hub (20) having an upper end and a lower end, the hub (20) having a plurality of tracks (61) equal to the plurality of shoes (50), the tracks (61) sloping toward each other toward the upper end of the hub (20) and away from each other toward the lower end of the hub (20), and the means (30, 32, 38) for simultaneously retracting the shoes (50) and for simultaneously projecting the shoes (50) comprises a spider (38), an elevator motor (32) for vertically movably coupling the spider (38) to the hub (20), means (62) on each shoe (50) for movably engaging a respective track (61) and means (48) on each shoe (50) for movably engaging the spider (38, 44), actuation of the elevator motor (32) in one direction retracting the shoes (50) simultaneously vertically upwardly and radially inwardly of the hub (20) and actuation of the elevator motor (32) in the opposite direction projecting the shoes (50) simultaneously vertically downwardly and radially outwardly to bring rotary element (14) contacting surfaces (70) of the shoes (50) into contact with the radially outer edge (66) of the rotary element center opening and center the rotary element (14) on the apparatus (12).

8. The apparatus of claim 7 wherein the tracks (61) are tangent to a somewhat conical imaginary surface around the hub (20).

9. Apparatus (12) for positioning tires (14) having different diameter beads (66) on a tire processing apparatus (10), the apparatus (12) including multiple shoes (50), each shoe (50) provided with a surface (70) for contacting the bead (66) of a tire (14) and means (30, 32, 38) for simultaneously retracting the shoes (50) radially toward each other to release the bead (66) of a tire (14) and for simultaneously projecting the shoes (50) radially away from each other to bring the tire bead (66) contacting surfaces (70) of the shoes (50) into contact with the tire bead (66) and center the tire (14) on the apparatus (12), each shoe (50) having a first region (72) with a radius (73) substantially equal to the radius of the bead (66) of the largest bead radius tire (14) to be processed on the tire processing apparatus (10).

10. The apparatus of claim 9 wherein each shoe (50) further comprises, on each side of the first region (72), a second region (74) with a radius (75) substantially equal to the radius of the bead (66) of the next largest bead radius tire (14) to be processed on the tire processing apparatus (10), the center of curvature (76) of each second region (74) being closer to the shoe, (50) than the center of curvature (78) of the first region (72).

11. The apparatus of claim 10 wherein the center of curvature (76) of each second region (74) is closer to the shoe (50) than the center of curvature (78) of the first region (72) by substantially the difference between the radii of curvature (73, 75) of the first (72) and second (74) regions.

12. The apparatus of claim 10 wherein each shoe (50) further comprises a third region (80) adjacent each second region (74) on the side thereof opposite the first region (72), each third region (80) having a radius (81) substantially equal to the radius of the bead (66) of the third largest bead radius tire (14) to be processed on the tire processing apparatus (10), the center of curvature (82) of each third region (80) being closer to the shoe (50) than the center of curvature (76) of each second region (74).

13. The apparatus of claim 12 wherein the center of curvature (82) of each third region (80) is closer to the shoe (50) than the center of curvature (76) of each second region (74) by substantially the difference between the radii of curvature (75, 81) of the second (74) and third (80) regions.

14. The apparatus of claim 9 wherein there are at least three such shoes (50).

15. The apparatus of claim 9 wherein the apparatus (12) further comprises a hub (20) for attachment to the tire processing apparatus (10), the hub (20) having an upper end and a lower end, the hub (20) having a plurality of tracks (61) equal to the plurality of shoes (50), the tracks (61) sloping toward each other toward the upper and of the hub (20) and away, from each other toward the lower end of the hub (20), and the means (30, 32, 38) for simultaneously retracting the shoes (50) and for simultaneously projecting the shoes (50) comprises a spider (38), an elevator motor (32) for vertically movably coupling the spider (38) to the hub (20), means (62) on each shoe (50) for movably engaging a respective track (61) and means (48) on each shoe (50) for movably engaging the spider (38, 44)-., actuation of the elevator motor (32) in one direction retracting the shoes (50) simultaneously vertically upwardly and radially inwardly of the hub (20) and actuation of the elevator motor (32) in the opposite direction projecting the shoes (50) simultaneously vertically downwardly and radially outwardly to bring tire bead (66) contacting surfaces (70) of the shoes (50) into contact with the tire bead (66) and center the tire (14) on the apparatus (12).

16. The apparatus of claim 15 wherein the tracks (61) are tangent to a somewhat conical imaginary surface around the hub (20).

17. Apparatus (12) for positioning rotary elements (14) on a rotary element processing apparatus (10), the apparatus (12) including a hub (20) for attachment to the rotary element processing apparatus (10), the hub (20) having an upper end and a lower end, the hub (20) having a plurality of tracks (61) which slope toward each other toward the upper end of the hub (20) and away from each other toward the lower end of the hub (20), a spider (38), an elevator motor (32) for vertically movably coupling the spider (38) to the hub (20) and a plurality of shoes (50) equal to the plurality of tracks (61), each shoe (50) provided with means (62) for movably engaging a respective track (61) and means (48) for movably engaging the spider (38, 44), each shoe (50) further provided with a surface (70) for contacting the radially outer edges (66) of the center openings of the rotary elements (14), actuation of the elevator motor (32) in one direction retracting the shoes (50) simultaneously vertically upwardly and radially inwardly of the hub (20) and actuation of the elevator motor (32) in the opposite direction projecting the shoes (50) simultaneously vertically downwardly and radially outwardly to bring the rotary element center opening (66) contacting surfaces (70) of the shoes (50) into contact with the center opening (66) of the rotary element (14) and positioning the rotary element (14) on the apparatus (12).

18. Apparatus (12) for positioning a tire (14) on a tire processing apparatus (10), the apparatus (12) including a hub (20) for attachment to the tire processing apparatus (10), the hub (20) having an upper end and a lower end, the hub (20) having a plurality of tracks (61) which slope toward each other toward the upper end of the hub (20) and away from each other toward the lower end of the hub (20), a spider (38), an elevator motor (32) for vertically movably coupling the spider (38) to the hub (20) and a plurality of shoes (50) equal to the plurality of tracks (61), each shoe (50) provided with means (62) for movably engaging a respective track (61) and means (48) for movably engaging the spider (38), each shoe (50) further provided with a surface for contacting the bead (66) of a tire (14), actuation of the elevator motor (32) in one direction retracting the shoes (50) simultaneously vertically upwardly and radially inwardly of the hub (20) and actuation of the elevator motor (32) in the opposite direction projecting the shoes (50) simultaneously vertically downwardly and radially outwardly to bring the tire bead contacting surfaces (70) of the shoes (50) into contact with the tire bead (66) and positioning the tire (14) on the apparatus (12).

*FIG. 1*

FIG 2

FIG. 3

EP 0 420 004 A1

EP 0 420 004 A1

FIG. 4

FIG. 5

FIG. 6

European
Patent Office

**EUROPEAN SEARCH
REPORT**

Application Number

**EP 90 11 7910**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-U-1 914 349   (GEBR. HOFMANN KG)<br>* Abstract; figure 1 *<br>— — — | 1,2,6,9,<br>10,14 | G 01 M 17/02<br>G 01 M 1/04 |
| A | DE-A-1 773 367   (GEBR. HOFMANN KG)<br>* Claim 1a; figures 4,5 *<br>— — — | 1,7,8,9,<br>15,16,17,<br>18 | |
| Y | US-A-3 291 171   (W.E.F. LEHMANN)<br>* Claim 1; figure 1 *<br>— — — | 1,2,6,9,<br>10,14 | |
| A | | 7,8,15,16,<br>17,18 | |
| | — — — — — | | |

|  |
|---|
| TECHNICAL FIELDS<br>SEARCHED (Int. Cl.5) |
| G 01 M |

The present search report has been drawn up for all claims

| Place of search | Date of completion of search | Examiner |
|---|---|---|
| The Hague | 05 December 90 | MUCS A.A. |